# EUROPÄISCHE PATENTSCHRIFT

(11) **EP 3 495 639 B1**
(45) Veröffentlichungstag und Bekanntmachung des Hinweises auf die Patenterteilung: **20.09.2023**
(21) Anmeldenummer: 18209949.9
(22) Anmeldetag: 04.12.2018
(51) Int. Cl.: F02C 6/08, F02C 9/18, F04D 29/68, F04D 27/02, F01D 9/04, F01D 9/06, F01D 25/16

(54) **VERDICHTERMODUL FÜR EINE STRÖMUNGSMASCHINE, DAS DIE GRENZSCHICHT IN EINEM VERDICHTERZWISCHENGEHÄUSE ABBAUT**
COMPRESSOR MODULE FOR A TURBOMACHINE REDUCING THE BOUNDARY LAYER IN AN INTERMEDIATE COMPRESSOR CASE
MODULE DE COMPRESSEUR POUR UNE TURBOMACHINE RÉDUISANT LA COUCHE LIMITE DANS UN CARTER INTERMÉDIAIRE DE COMPRESSEUR

(30) Priorität: 07.12.2017 DE 102017222210
(43) Veröffentlichungstag der Anmeldung: 12.06.2019
(73) Patentinhaber: MTU Aero Engines AG, 80995 München (DE)
(72) Erfinder: Wunderer, Roland, 85778 Haimhausen (DE)

(56) Entgegenhaltungen:
- EP-A2- 2 177 770
- GB-A- 814 745
- US-A- 2 720 356
- US-A- 5 845 482
- US-A1- 2005 081 530
- US-A1- 2015 176 494

## Beschreibung

### Technisches Gebiet

Die vorliegende Erfindung betrifft ein Verdichtermodul für eine Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Dabei entzieht die Turbine dem Heißgas anteilig auch Energie, um den Verdichter anzutreiben.

Der vorliegende Gegenstand richtet sich auf den Verdichter bzw. ein Modul davon; der Gegenstand soll aber zunächst ausdrücklich nicht auf das zur Illustration in Bezug genommene Strahltriebwerk beschränkt sein, es ist bspw. auch eine Anwendung in einer stationären Gasturbine möglich.

Die US 5,845,482 A betrifft ein Verdichterzwischengehäuse mit einer Auslassöffnung radial innen und einer Umströmungsstruktur zur Strömungsführung nach radial außen, wobei die Auslassöffnung axial hinter der Umströmungsstruktur angeordnet ist.

Auch die US 2015/0176494 A1 betrifft ein Verdichterzwischengehäuse mit einer Auslassöffnung radial innen und einer Strömungsführung nach radial außen. Dabei ist die Auslassöffnung axial im Bereich der Umströmungsstruktur angeordnet.

Die US 2005/0081530 A1 betrifft eine kombinierte Fan-Auslass-/Verdichtereinlassstufe, also den Eingang in den Verdichter. Die US 2,720,356 A und GB 814 745 A betreffen jeweils mehrstufige Verdichter mit Auslassöffnungen zur Strömungsoptimierung. Die EP 2 177 770 A2 betrifft ebenfalls einen mehrstufigen Verdichter, wobei mit einem Kanal in einer Leitschaufel eine Fluiddichtung geschaffen wird.

### Darstellung der Erfindung

Der vorliegenden Erfindung liegt das technische Problem zugrunde, ein besonders vorteilhaftes Verdichtermodul für eine Strömungsmaschine anzugeben.

Erfindungsgemäß wird dies mit einem Verdichtermodul gemäß Anspruch 1 gelöst. Dieses bildet einen Verdichtergaskanal zum Führen des zu verdichtenden Gases (im Folgenden auch "Verdichtergas") und weist in dem Verdichtergaskanal eine Umströmungsstruktur auf, die sich radial zwischen einen Innen- und einer Außengehäusewand des Verdichtermoduls erstreckt. Dabei ist in einer Innengehäusewandfläche, mit welcher die Innengehäusewand den Verdichtergaskanal nach radial innen begrenzt, eine Auslassöffnung zum anteiligen Auslassen des Verdichtergases in einen Auslasskanal angeordnet. Dieser Auslasskanal erstreckt sich erfindungsgemäß durch die Umströmungsstruktur nach radial außen, das ausgelassene Gas (im Folgenden auch "Auslassgas") wird also nach radial außerhalb des Verdichtergaskanals geführt. Das Auslassen an der Innengehäusewand kann einerseits strömungstechnisch von Vorteil sein (siehe unten im Detail). Andererseits kann das Führen des Auslassgases nach radial außen bspw. insoweit von Vorteil sein, als dort mehr Bauraum zur Verfügung steht.

Bevorzugte Ausführungsformen finden sich in den abhängigen Ansprüchen und der gesamten Beschreibung, wobei bei der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Ohne ausdrücklich gegenteilige Angabe beziehen sich die Konkretisierungen stets auf sowohl das Verdichtermodul als auch einen damit ausgestatteten Verdichter bzw. eine entsprechende Strömungsmaschine.

Das Verdichtergas ist das Gas, das eine der Brennkammer vorgelagerte Verdichteranordnung durchströmt und dabei komprimiert wird, im Falle des Strahltriebwerks also die angesaugte Luft. Zur begrifflichen Unterscheidung wird jener Teil davon, der durch die Auslassöffnung in der Innengehäusewandfläche aus dem Verdichtergaskanal austritt, als "Auslassgas" bezeichnet. Das Verdichtergas tritt aufgrund des Überdrucks im Verdichtergaskanal zu einem (sehr geringen) Anteil durch die Auslassöffnung aus, wird also gewissermaßen ausgeblasen. Das Verdichtermodul bildet den Verdichtergaskanal, in diesem wird das Verdichtergas in Richtung Brennkammereinlass geführt. Nach radial innen wird der Verdichtergaskanal von der Innengehäusewandfläche begrenzt, nach radial außen von einer Außengehäusewandfläche der Außengehäusewand. Die Innengehäusewandfläche und die Außengehäusewandfläche liegen einander radial gegenüber, erstere ist nach radial außen gewandt, letztere nach radial innen.

Generell bezieht sich im Rahmen dieser Offenbarung "axial" auf die Längsachse des Verdichtermoduls, mithin also die Längsachse des Verdichters bzw. der Strömungsmaschine. Diese Längsachse kann bspw. mit einer Rotationsachse zusammenfallen, um welche die Laufschaufeln einer Verdichterstufe bzw. eines Verdichters rotieren. "Radial" betrifft die dazu senkrechten, von der Längsachse weg weisenden Radialrichtungen, und ein "Umlauf" bzw. die "Umlaufrichtung" oder "umlaufend" betreffen die Drehung um die Längsachse. Ferner sind "ein" und "eine" im Rahmen dieser Offenbarung ohne ausdrücklich gegenteilige Angabe als unbestimmte Artikel und damit stets auch als "mindestens ein" bzw. "mindestens eine" zu lesen. Es kann also bspw. umlaufend verteilt eine Mehrzahl Umströmungsstrukturen geben bzw. auch eine Mehrzahl Auslassöffnungen etc., siehe unten im Detail.

Das Auslassgas wird durch die Umströmungsstruktur nach radial außerhalb des Verdichtergaskanals gebracht, dort kann bspw. eine weitergehende Führung konstruktiv einfacher als radial innerhalb sein. Der Bauraum radial innerhalb ist begrenzt, und zudem ist bzw. sind dort auch die Wellen mit zugehörigen Lagern etc. angeordnet. Radial außerhalb des Verdichtergaskanals kann das Auslassgas dann bspw. zur Brennkammer bzw. Turbine geführt und als Kühlfluid genutzt werden. Das nach radial außen geführte Auslassgas kann aber bspw. auch weitergehende Anwendungsmöglichkeiten eröffnen, etwa im Falle eines Triebwerks auch vom Flugzeug selbst genutzt werden, z. B. zur Druckversorgung der Kabine oder generell für pneumatische Systeme (Klimaanlage etc.).

Das Auslassen des Auslassgases an der Innengehäusewandfläche kann bspw. strömungsmechanisch von Vorteil sein, weil damit dicke und somit stark belastete Grenzschichten der Strömung abgebaut werden können. In der Folge kann sich Verdichtergas aus einem Kernbereich der Strömung, wo das Verdichtergas eine höhere kinetische Energie hat, zur Innengehäusewandfläche hin verlagern, was der Auslassöffnung nachgelagert eine neu ausgebildete Grenzschicht höherer Energie ergibt. Diese ist dann bspw. weniger verlustbehaftet und damit weniger ablösegefährdet. Ein solcher strömungsmechanischer Vorteil kann sich insbesondere in einer Krümmung ergeben, aber auch einer Krümmung vorgelagert von Vorteil sein (nämlich einer Akkumulation belasteter Grenzschichten vorbeugen helfen).

Die Innengehäusewandfläche erstreckt sich axial mit einer abschnittsweisen Krümmung. Diese Krümmung besteht also in Bezug Schnittebenen, die jeweils die Längsachse (siehe oben) beinhalten. Aus Sicht des strömenden Verdichtergases bedingt die Krümmung eine Richtungsänderung bzw. einen Versatz, was die Grenzflächen strömungsmechanisch belastet. Bevorzugt erstreckt sich die Krümmung axial nicht über die gesamte Innengehäusewandfläche, sondern nur über in einen Teil davon, an den stromauf und/oder stromabwärts Abschnitte anschließen, die für sich in besagten Schnittebenen betrachtet gerade sind. Ohne ausdrücklich gegenteilige Angabe beziehen sich stromauf/stromab bzw. vor-/nachgelagert auf das Verdichtergas im Verdichtergaskanal.

Die Auslassöffnung ist in der Krümmung und/oder der Krümmung vorgelagert angeordnet. Letzteres kann bspw. insoweit vorteilhaft sein, als dann vor der strömungsmechanisch eigentlich kritischen Krümmung eine zuvor aufgebaute belastete Grenzschicht zumindest teilweise abgebaut werden kann. Die Auslassöffnung erstreckt sich also anteilig der Krümmung vorgelagert und in diese hinein.

In bevorzugter Ausgestaltung verläuft die Innengehäusewandfläche im Bereich der Krümmung konvex, was sich wiederum auf die die Längsachse beinhaltenden Schnittebenen bezieht. Mit der Auslassöffnung kann einem Abreißen der Strömung dort vorgebeugt werden.

Bei einer bevorzugten Ausführungsform ist die Umströmungsstruktur als Schaufel ausgebildet, hat sie also bezogen auf die Umströmung mit dem Verdichtergas stromauf eine Vorderkante und stromab eine Hinterkante. Zwischen Vorder- und Hinterkante erstrecken sich zwei einander entgegengesetzte Seitenflächen, die Schaufel kann profiliert oder auch unprofiliert ausgeführt sein. Bevorzugt ist eine Seitenfläche als Saugseitenfläche und die andere als Druckseitenfläche ausgebildet.

In bevorzugter Ausgestaltung ist die als Schaufel ausgebildete Umströmungsstruktur bezogen auf die Umströmung mit dem Verdichtergas allenfalls schwach umlenkend ausgebildet. Dies meint eine Umlenkung von nicht mehr als 5°, 4° bzw. 3° (in Reihenfolge der Nennung zunehmend bevorzugt). Die Schaufel kann auch nicht umlenkend vorgesehen sein (0°), es kann aber andererseits auch eine Untergrenze bei bspw. mindestens 1° liegen. Bei einer bevorzugten Ausführungsform bildet die Umströmungsstruktur entweder selbst eine tragende Stützstrebe oder stellt sie eine Verkleidung einer solchen tragenden Stützstrebe dar. Bevorzugt ist eine Kombination mit der Ausgestaltung als Schaufel, die dann auch als Stützschaufel bzw. *Strut* bezeichnet wird. Eine "Stützstrebe" ist ein tragender Bestandteil des Verdichtermoduls, der einen radial innerhalb des Verdichtergaskanals angeordneten Innengehäusebereich und einen radial außerhalb davon angeordneten Außengehäusebereich trägt. Bevorzugt kann die Stützstrebe ein Lager der Verdichterwelle tragen, jedenfalls mittelbar. Bevorzugt können dann umlaufend eine Mehrzahl Stützstreben speichenartig vorgesehen sein; miteinander können die Stützstreben das Lager dann zentriert im Gehäuse halten. Einerseits kann die Umströmungsstruktur selbst die Stützstrebe darstellen; die Umströmungsstruktur kann aber andererseits auch als Verkleidung, also Umhüllung der eigentlich tragenden Stützstrebe mit dieser zur strömungsmechanischen Optimierung zusammengesetzt sein.

Bei einer bevorzugten Ausführungsform begrenzt die Umströmungsstruktur selbst den Auslasskanal, also jedenfalls jenen Abschnitt davon, der sich radial durch die Umströmungsstruktur hindurch erstreckt. Das Umströmungsstrukturmaterial, aus dem die Umströmungsstruktur vorgesehen ist, begrenzt dann also einerseits nach innen den Auslasskanal und bildet andererseits eine dem Verdichtergas zugewandte Außenfläche der Umströmungsstruktur (die aber bspw. auch schutzbeschichtet sein kann). Im Allgemeinen könnte die Umströmungsstruktur hingegen auch lediglich eine Verkleidung/Umhüllung darstellen, in der dann eine den Auslasskanal bildende Fluidleitung verlegt ist. Im Falle der bevorzugten integralen Ausgestaltung kann der Auslasskanal bspw. bei einer gießtechnischen Herstellung bereits in der Gussform berücksichtigt werden. Dies ist aber nicht zwingend, die Umströmungsstruktur kann bspw. auch generativ aufgebaut werden (aus einem Datenmodell durch schichtweises selektives Verfestigen eines Werkstoffs), wobei ebenfalls ein integraler Auslasskanal berücksichtigt werden kann.

Erfindungsgemäß ist zumindest ein Abschnitt der Auslassöffnung der Umströmungsstruktur vorgelagert (bezogen auf die Verdichtergasströmung). Es kann sich auch die gesamte Auslassöffnung der Umströmungsstruktur vorgelagert erstrecken, also bspw. stromauf der Vorderkante einer vorstehend beschriebenen Schaufel liegen. Andererseits kann sich die Auslassöffnung aber anteilig auch über die Vorderkante der Umströmungsstruktur hinweg nach stromab erstrecken.

In bevorzugter Ausgestaltung sind umlaufend eine Mehrzahl Umströmungsstrukturen vorgesehen. "Mehrzahl" meint generell mindestens 2, wobei mindestens 3, 4, 5, 6, 7, 8, 9 bzw. 10 in der Reihenfolge der Nennung zunehmend weiter bevorzugt sein können. Von den Untergrenzen unabhängige Obergrenzen können bspw. bei höchstens 100, 80, 60, 40, 30, 20 bzw. 15 liegen. Bevorzugt sind die umlaufend vorgesehenen Umströmungsstrukturen drehsymmetrisch zueinander.

In bevorzugter Ausgestaltung erstreckt sich zumindest ein Abschnitt der Auslassöffnung bezogen auf die Umlaufrichtung zwischen zwei zueinander umlaufend nächstbenachbarten Umströmungsstrukturen. Die Auslassöffnung kann sich dabei tatsächlich durchgehend von der einen zur nächstbenachbarten Umströmungsstruktur erstrecken, also bspw. eine in Umlaufrichtung langgestreckte Form haben. Andererseits kann die Auslassöffnung bspw. auch eine runde Form haben, etwa elliptisch bzw. insbesondere kreisrund sein. Insbesondere eine solche Auslassöffnung kann die Strecke zwischen den Umströmungsstrukturen dann auch nur anteilig ausfüllen, wobei dann zwischen den Umströmungsstrukturen bevorzugt auch noch (eine) weitere Auslassöffnung(en) vorgesehen sein können.

Es kann einerseits die gesamte Auslassöffnung zwischen den Umströmungsstrukturen angeordnet sein, andererseits kann sie sich aber auch anteilig den Umströmungsstrukturen vorgelagert erstrecken, siehe vorne. Generell können die eben geschilderten Formgebungen ("in Umlaufrichtung langgestreckt" oder "rund") auch im Falle einer im Gesamten der Umströmungsstruktur vorgelagerten Auslassöffnung von Interesse sein.

Bei einer bevorzugten Ausführungsform sind in der Innengehäusewandfläche eine Mehrzahl Auslassöffnungen vorgesehen, die gemeinsam dem durch die Umströmungsstruktur nach radial außen geführten Auslasskanal zugeordnet sind. Es wird auf die vorstehenden Angaben zur "Mehrzahl" verwiesen. In der Innengehäusewandfläche kann es dann aber insgesamt noch deutlich mehr Auslassöffnungen geben, die dann jeweils gruppenweise einer jeweiligen Umströmungsstruktur (dem Auslasskanal darin) zugeordnet sind. Das durch die einzelnen, gemeinsam der Umströmungsstruktur zugeordneten Auslassöffnungen austretende Auslassgas kann bspw. in einer Sammelstelle im Innengehäuse zusammengeführt werden. Von dort gelangt es dann durch den Auslasskanal in der Umströmungsstruktur nach radial außen. Eine Sammelstelle im Innengehäuse kann auch generell bevorzugt sein, bspw. um das Auslassgas nach dem Austritt durch die Auslassöffnung und vor dem Führen durch die Umströmungsstruktur zu expandieren.

Erfindungsgemäß ist das Verdichtermodul mit der erfindungsgemäßen Auslassgasführung ein Verdichterzwischengehäuse. Dieses kann bspw. zwischen einem (axial letzten) Verdichter und der Brennkammer angeordnet werden/sein, bevorzugt ist eine Anordnung zwischen zwei Verdichtern. Ein "Verdichter" ist in der Regel aus mehreren Stufen aufgebaut, typischerweise weist jede Stufe einen Lauf- und einen darauf folgenden Leitschaufelkranz auf. Es können bspw. die Laufschaufelkränze eines Verdichters auf derselben Welle drehen und die Laufschaufelkränze eines anderen Verdichters auf einer anderen Welle. Im Allgemeinen kann das im Rahmen dieser Offenbarung beschriebene "Verdichtermodul" auch ein Verdichter sein; der Auslasskanal kann dann durch eine Leitschaufel des Verdichters nach radial außen geführt sein. Bevorzugt ist das Verdichtermodul ein Verdichterzwischengehäuse.

Die Verdichter können sich untereinander in ihrer radialen Lage unterscheiden, weil sie bspw. mit unterschiedlichen Drehzahlen betrieben werden. Daraus kann sich ein radialer Versatz zwischen den Verdichtern ergeben, was im dazwischen angeordneten Verdichterzwischengehäuse einen gekrümmten Verlauf des Verdichtergaskanals bedingt. Daraus kann insbesondere ein vorstehend beschriebener, gekrümmter Verlauf der Innengehäusewandfläche resultieren. Speziell in den konvex gekrümmten Bereichen ist die Strömung dann stark belastet und lässt sich durch das Anordnen der Auslassöffnung(en) dort die Gefahr eines Ablösens verringern (neu ausgebildete Grenzschicht mit höherer Energie, siehe vorne). Die Problematik der stark belasteten Grenzschichten ließe sich zwar ggf. auch mit einem axial hinreichend langgestrecken Verdichtergaskanal adressieren, allerdings erhöht sich damit die Baulänge der Strömungsmaschine insgesamt. Dies kann bereits wegen des höheren Materialbedarfs nachteilig sein, im Falle eines Flugtriebwerks bedeutet das höhere Gewicht dann letztlich auch einen erhöhten Treibstoffverbrauch.

Die Erfindung betrifft auch eine Verdichteranordnung, die ein als Verdichterzwischengehäuse ausgebildetes erfindungsgemäßes Verdichtermodul und mindestens einen Verdichter aufweist, vgl. auch die vorstehenden Anmerkungen. Bevorzugt weist die Verdichteranordnung mindestens zwei Verdichter auf, zwischen denen das Verdichterzwischengehäuse angeordnet ist. In der Regel wird die Verdichteranordnung nicht mehr als vier bzw drei Verdichter aufweisen. Bevorzugt kann zwischen sämtlichen Verdichtern jeweils ein erfindungsgemäß ausgestaltetes Verdichterzwischengehäuse angeordnet sein.

Ebenso betrifft die Erfindung die Verwendung eines vorliegend offenbarten Verdichtermoduls oder einer Verdichteranordnung in einer Strömungsmaschine, im Allgemeinen bspw. auch in einer Gasturbine. Bevorzugt ist die Verwendung in einem Flugtriebwerk, insbesondere einem Strahltriebwerk.

### Kurze Beschreibung der Figuren

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Strahltriebwerk in einem Längsschnitt;
- Figur 2: als Teil einer Verdichteranordnung des Strahltriebwerks gemäß Figur 1 ein Verdichterzwischengehäuse;
- Figur 3: eine Umströmungsstruktur des Verdichterzwischengehäuses gemäß Figur 2 in einem Schnitt;
- Figur4a-d: jeweils zwei Umströmungsstrukturen gemäß Figur 3 mit unterschiedlich angeordneten Auslassöffnungen.

### Bevorzugte Ausführung der Erfindung

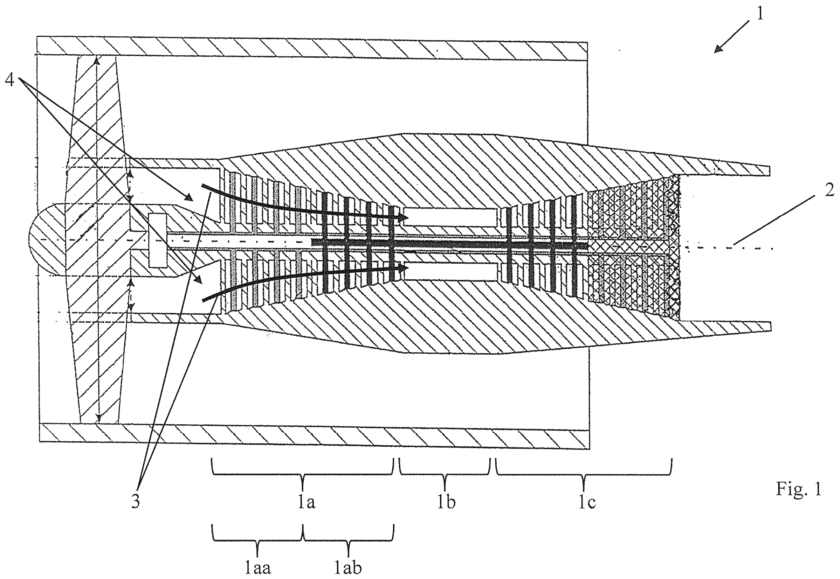

**Figur 1** zeigt eine Strömungsmaschine 1 im Schnitt, konkret ein Strahltriebwerk (Mantelstromtriebwerk). Die Strömungsmaschine 1 gliedert sich funktional in Verdichteranordnung 1a, Brennkammer 1b und Turbine 1c. Sowohl die Verdichteranordnung 1a als auch die Turbine 1c sind jeweils aus mehreren Modulen aufgebaut, die Verdichteranordnung 1a vorliegend aus einem Niederdruck- laa und einem Hochdruckverdichter 1ab. Jeder Verdichter 1aa, 1ab ist seinerseits aus mehreren Stufen aufgebaut, jede Stufe setzt sich in der Regel aus einem Laufschaufelkranz und einem darauffolgenden Leitschaufelkranz zusammen. Im Betrieb wird die Verdichteranordnung 1a bezogen auf eine Längsachse 2 axial von dem Verdichtergas 3, vorliegend Luft, durchströmt, und zwar in einem Verdichtergaskanal 4. Dabei wird das Verdichtergas 3 komprimiert, in der Brennkammer 1b wird dann Kerosin hinzugemischt und wird diese Mischung verbrannt.

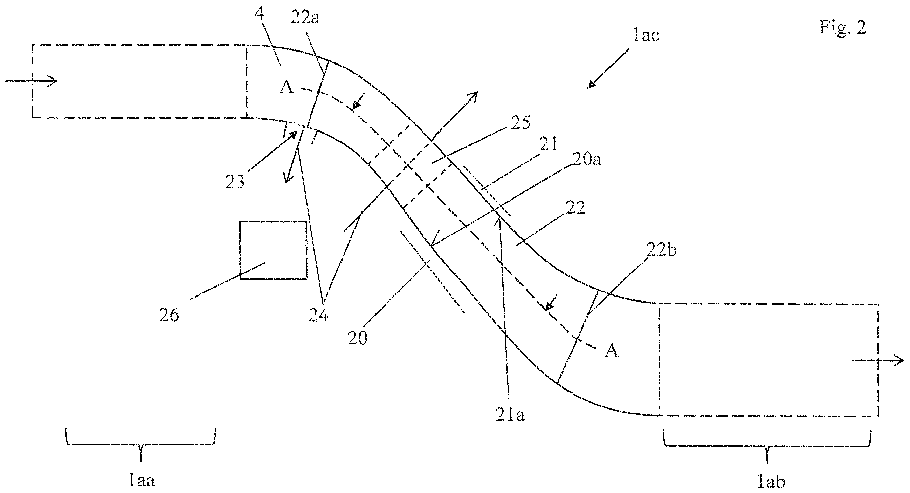

**Figur 2** illustriert einen in Figur 1 nicht im Einzelnen dargestellten Teil der Verdichteranordnung 1a, nämlich ein Verdichterzwischengehäuse 1ac. Gezeigt ist wiederum ein Längsschnitt (die Längsachse 2 liegt in der Schnittebene). Das Verdichterzwischengehäuse 1ac verbindet den Niederdruckverdichter 1aa mit dem Hochdruckverdichter 1ab. Da die Verdichter 1aa, 1ab mit unterschiedlicher Drehzahl drehen (vgl. Figur 1, sie laufen auf unterschiedlichen Wellen), sind sie radial unterschiedlich bemessen. Im Bereich des Niedrigdruckverdichters laa liegt der Verdichtergaskanal 4 radial weiter außen als im Bereich des Hochdruckverdichters 1ab. Dementsprechend erstreckt sich der Verdichtergaskanal 4 im Bereich des Verdichterzwischengehäuses 1ac gekrümmt.

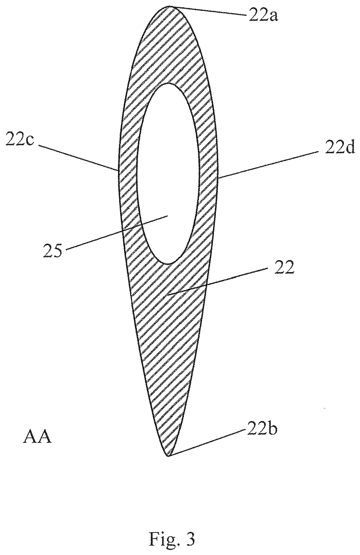

Wie aus Figur 2 ersichtlich, wird der Verdichtergaskanal 4 radial zwischen einer Innengehäusewand 20 und einer Außengehäusewand 21 eingefasst. Eine Innengehäusewandfläche 20a der Innengehäusewand 20 begrenzt den Verdichtergaskanal 4 nach radial innen, die Außengehäusewandfläche 21a der Außengehäusewand 21 begrenzt ihn nach radial außen. Ferner ist in dem Verdichtergaskanal 4 eine Umströmungsstruktur 22 angeordnet, vgl. zur Illustration auch den Schnitt gemäß Figur 3. Die Umströmungsstruktur 22 ist als Schaufel ausgebildet und weist eine Vorderkante 22a, sowie eine Hinterkante 22b auf. Ferner erfüllt sie vorliegend eine Stützfunktion, stellt sie also eine tragende Verbindung zwischen radial innerhalb und außerhalb liegenden Teilen des Verdichterzwischengehäuses 1ac dar.

Aufgrund der gekrümmten Erstreckung des Verdichtergaskanals 4 ist die Innengehäusewandfläche 20a abschnittsweise auch gekrümmt, nämlich in einem ersten Abschnitt konvex und in einem zweiten Abschnitt konkav. Insbesondere die konvexe Krümmung führt zu einer an der Grenzfläche stark belasteten Strömung. Vorliegend ist deshalb in der Krümmung in dem konvexen Abschnitt eine Auslassöffnung 23 angeordnet, durch welche ein im Verhältnis kleiner Teil des Verdichtergases 3 als Auslassgas 24 ausgeblasen wird. Dieses Auslassgas 24 wird in einer Sammelstelle 26 gesammelt und durch einen Auslasskanal 25, welcher sich durch die Umströmungsstruktur 22 erstreckt, nach radial außerhalb des Verdichtergaskanals 4 gebracht. Dort steht mehr Bauraum zur Verfügung bzw. ergeben sich weitergehende Nutzungsmöglichkeiten, vgl. die Beschreibungseinleitung.

**Figur 3** zeigt die Umströmungsstruktur 22 in einem Schnitt, vgl. die Schnittlinie AA gemäß Figur 2. Zusätzlich zu Vorder- 22a und Hinterkante 22b sind in diesem Schnitt auch die Seitenflächen 22c,d zu erkennen. Ferner ist auch die Anordnung des Auslasskanals 25 ersichtlich, den das Auslassgas 24 senkrecht bzw. schräg zur Zeichenebene durchströmt. Der Auslasskanal 25 kann bspw. bei einer Herstellung in einem Gießverfahren über einen Gusskern berücksichtigt werden, die Umströmungsstruktur 22 kann aber bspw. auch generativ schichtweise aufgebaut werden (wobei der Auslasskanal 25 frei bleibt).

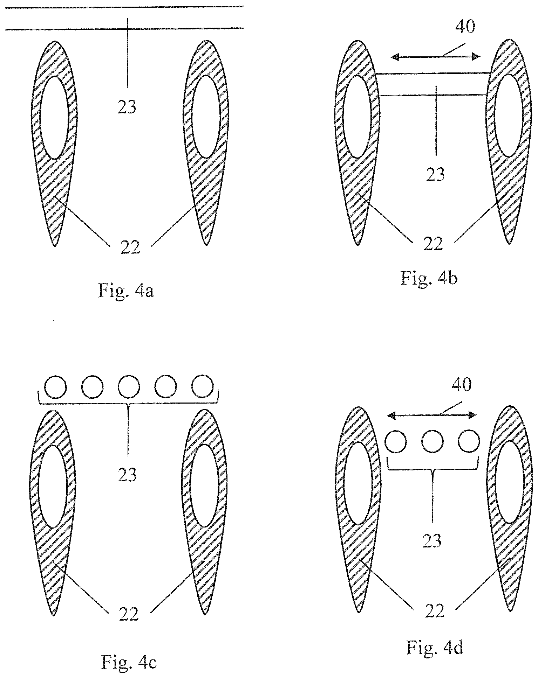

Die Figuren 4a - c zeigen nun jeweils zwei solche Umströmungsstrukturen 22, die in Umlaufrichtung 40 aufeinander folgen. Über den gesamten Umlauf können bspw. rund 10 Umströmungsstrukturen 22 vorgesehen sein, vgl. auch die Beschreibungseinleitung.

Bei der Variante gemäß Figur 4a erstreckt sich die Auslassöffnung 23 in der Umlaufrichtung 40 langgestreckt und ist sie in Bezug auf die Verdichtergasströmung den Umströmungsstrukturen 22 vorgelagert angeordnet. Die Variante gemäß Figur 4b, die außerhalb des Schutzumfangs der beanspruchten Erfindung fällt, zeigt eine langgestreckte Auslassöffnung 23, die sich in diesem Fall jedoch bezogen auf die Umlaufrichtung 40 zwischen den Umströmungsstrukturen 22 erstreckt.

Die Varianten gemäß den Figuren 4c,d zeigen jeweils mehrere Auslassöffnungen 23. Diese können gruppenweise zusammengefasst sein, wobei das jeweilig ausgelassene Auslassgas 24 dann in der Sammelstelle 26 zusammengeführt und durch einen gemeinsamen Auslasskanal 25 nach radial außerhalb gebracht wird (vgl. auch Figur 2 bzgl. der Sammelstelle 26). Bei der Variante gemäß Figur 4c sind die Auslassöffnungen 23 den Umströmungsstrukturen 22 vorgelagert angeordnet. Die Variante gemäß Figur 4d, die außerhalb des Schutzumfangs der beanspruchten Erfindung fällt, zeigt Auslassöffnungen 23, die bezogen auf die Umlaufrichtung 40 zwischen den Umströmungsstrukturen 22 angeordnet sind.

### BEZUGSZEICHENLISTE

- Strömungsmaschine: 1
- Verdichteranordnung: 1a
- Niederdruckverdichter: 1aa
- Hochdruckverdichter: 1ab
- Verdichterzwischengehäuse: 1ac
- Brennkammer: 1b
- Turbine: 1c
- Längsachse (der Strömungsmaschine): 2
- Verdichtergas: 3
- Verdichtergaskanal: 4
- Innengehäusewand: 20
- Innengehäusewandfläche: 20a
- Außengehäusewand: 21
- Außengehäusewandfläche: 21a
- Umströmungsstruktur: 22
- Vorderkante davon: 22a
- Hinterkante davon: 22b
- Seitenflächen: 22c,d
- Auslassöffnung: 23
- Auslassgas: 24
- Auslasskanal: 25
- Sammelstelle: 26
- Umlaufrichtung: 40

## Patentansprüche

1. Verdichtermodul (1aa, 1ab, 1ac) für eine Strömungsmaschine (1),
welches Verdichtermodul (1aa, 1ab, 1ac) einen Verdichtergaskanal (4) zum Führen eines zu verdichtenden Verdichtergases (3) bildet,
wobei das Verdichtermodul (1aa, 1ab, 1ac) als Verdichterzwischengehäuse (1ac) ausgebildet ist und sich durch den Verdichtergaskanal (4) eine Umströmungsstruktur (22) radial zwischen einer Innengehäusewand (20) und einer Außengehäusewand (21) erstreckt,
und wobei in einer Innengehäusewandfläche (20a), mit welcher die Innengehäusewand (20) den Verdichtergaskanal (4) nach radial innen begrenzt, eine Auslassöffnung (23) zum anteiligen Auslassen des in dem Verdichtergaskanal (4) geführten Verdichtergases (3) angeordnet ist,
wobei sich zum Führen des durch die Auslassöffnung (23) ausgelassenen Auslassgases (24) an die Auslassöffnung (23) ein Auslasskanal (25) anschließt,
und wobei sich der Auslasskanal (25) durch die Umströmungsstruktur (22) nach radial außerhalb des Verdichtergaskanals (4) erstreckt,
wobei sich die Innengehäusewandfläche (20a) axial mit einer Krümmung erstreckt und die Auslassöffnung (23) in der Krümmung und/oder der Krümmung vorgelagert angeordnet ist, bezogen auf das in dem Verdichtergaskanal (4) geführte Verdichtergas (3), **dadurch gekennzeichnet,**
**dass** sich die Auslassöffnung (23) bezogen auf das in dem Verdichtergaskanal (4) geführte Verdichtergas (3) zumindest anteilig der Umströmungsstruktur (22) vorgelagert erstreckt.

2. Verdichtermodul (1ac) nach Anspruch 1, bei welchem die Innengehäusewandfläche (20a) in der Krümmung konvex gekrümmt ist.

3. Verdichtermodul (1ac) nach einem der vorstehenden Ansprüche, bei welchem die Umströmungsstruktur (22) als Schaufel ausgebildet ist, die in Bezug auf die Umströmung mit dem in dem Verdichtergaskanal (4) geführten Verdichtergas (3) eine Vorderkante (22a) und eine Hinterkante (22b) aufweist, sowie zwei sich jeweils zwischen der Vorder- (22a) und der Hinterkante (22b) erstreckende Seitenflächen (22c,d).

4. Verdichtermodul (1ac) nach Anspruch 4, bei welchem die Schaufel allenfalls schwach, nämlich um höchstens 5° umlenkend ausgebildet ist.

5. Verdichtermodul (1ac) nach einem der vorstehenden Ansprüche, bei welchem die Umströmungsstruktur (22) eine tragende Stützstrebe bildet oder eine Verkleidung einer solchen darstellt.

6. Verdichtermodul (1ac) nach einem der vorstehenden Ansprüche, bei welchem die Umströmungsstruktur (22) selbst in ihrem Inneren zumindest einen Abschnitt des Auslasskanals (25) begrenzt.

7. Verdichtermodul (1ac) nach einem der vorstehenden Ansprüche, bei welchem in dem Verdichtergaskanal (4) in Umlaufrichtung verteilt eine Mehrzahl Umströmungsstrukturen (22) vorgesehen sind.

8. Verdichtermodul (1ac) nach Anspruch 7, bei welchem die Auslassöffnung (23) bezogen auf die Umlaufrichtung zumindest anteilig zwischen zwei zueinander nächstbenachbarten Umströmungsstrukturen (22) angeordnet ist.

9. Verdichtermodul (1ac) nach einem der vorstehenden Ansprüche, bei welchem in der Innengehäusewandfläche (20a) eine Mehrzahl Auslassöffnungen (23) vorgesehen sind, die gemeinsam dem sich durch die Umströmungsstruktur (22) nach radial außerhalb erstreckenden Auslasskanal (25) zugeordnet sind.

10. Verdichteranordnung (1a) zum Komprimieren von Verdichtergas (3) für eine Strömungsmaschine (1), mit einem als Verdichterzwischengehäuse (1ac) ausgebildeten Verdichtermodul nach einem der vorstehenden Ansprüche und einem Verdichter (1aa), welcher dem Verdichterzwischengehäuse (1ac) vorgelagert angeordnet ist.

11. Verdichteranordnung (1a) nach Anspruch 10 mit einem weiteren Verdichter (1ab), welcher dem als Verdichterzwischengehäuse (1ac) ausgebildeten Verdichtermodul nachgelagert angeordnet ist.

12. Verwendung eines Verdichtermoduls (1aa, 1ab, 1ac) nach einem der Ansprüche 1 bis 9 oder einer Verdichteranordnung (1a) nach Anspruch 10 oder 11 für eine Strömungsmaschine (1), insbesondere ein Strahltriebwerk.

## Claims

1. Compressor module (1aa, 1ab, 1ac) for a turbomachine (1),
which compressor module (1aa, 1ab, 1ac) forms a compressor gas duct (4) for conducting a compressor gas (3) to be compressed,
the compressor module (1aa, 1ab, 1ac) being in the form of an intermediate compressor housing (1ac) and a flow bypass structure (22) extending through the compressor gas duct (4) radially between an inner housing wall (20) and an outer housing wall (21),
and a discharge opening (23), for proportionally discharging the compressor gas (3) conducted in the compressor gas duct (4), being arranged in an inner housing wall surface (20a) with which the inner housing wall (20) radially inwardly delimits the compressor gas duct (4),
a discharge duct (25) being connected to the discharge opening (23) for conducting the discharge gas (24) discharged through the discharge opening (23),
and the discharge duct (25) extending through the flow bypass structure (22) radially outside the compressor gas duct (4),
the inner housing wall surface (20a) extending axially with a curvature and the discharge opening (23) being arranged in the curvature and/or upstream of the curvature relative to the compressor gas (3) conducted in the compressor gas duct (4), **characterized in that**
the discharge opening (23) extends, relative to the compressor gas (3) conducted in the compressor gas duct (4), at least proportionally upstream of the flow bypass structure (22).

2. Compressor module (1ac) according to claim 1, wherein the inner housing wall surface (20a) is convexly curved in the curvature.

3. Compressor module (1ac) according to either of the preceding claims, wherein the flow bypass structure (22) is in the form of a blade which has a leading edge (22a) and a trailing edge (22b) relative to the bypass flow by the compressor gas (3) conducted in the compressor gas duct (4), and two lateral surfaces (22c, d) extending between the leading edge (22a) and the trailing edge (22b).

4. Compressor module (1ac) according to claim 4, wherein the blade is designed to deflect at most weakly, specifically by no more than 5°.

5. Compressor module (1ac) according to any of the preceding claims, wherein the flow bypass structure (22) forms a bearing support strut or represents a fairing of such a strut.

6. Compressor module (1ac) according to any of the preceding claims, wherein, in its interior, the flow bypass structure (22) itself delimits at least a portion of the discharge duct (25).

7. Compressor module (1ac) according to any of the preceding claims, wherein a plurality of flow bypass structures (22) are provided in the compressor gas duct (4) so as to be distributed in the circumferential direction.

8. Compressor module (1ac) according to claim 7, wherein the discharge opening (23) is arranged, relative to the circumferential direction, at least proportionally between two most closely mutually adjacent flow bypass structures (22).

9. Compressor module (1ac) according to any of the preceding claims, wherein a plurality of discharge openings (23) are provided in the inner housing wall surface (20a) and are jointly assigned to the discharge duct (25) extending radially outwardly through the flow bypass structure (22).

10. Compressor assembly (1a) for compressing compressor gas (3) for a turbomachine (1), comprising a compressor module in the form of an intermediate compressor housing (1ac) according to any of the preceding claims and a compressor (1aa) arranged upstream of the intermediate compressor housing (1ac).

11. Compressor assembly (1a) according to claim 10, comprising a further compressor (1ab) arranged downstream of the compressor module in the form of an intermediate compressor housing (1ac).

12. Use of a compressor module (1aa, 1ab, 1ac) according to any of claims 1 to 9 or a compressor assembly (1a) according to claim 10 or 11 for a turbomachine (1), in particular a jet engine.

## Revendications

1. Module de compresseur (1aa, 1ab, 1ac) pour une turbomachine (1),
lequel module de compresseur (1aa, 1ab, 1ac) forme un canal de gaz de compresseur (4) permettant de guider un gaz de compresseur (3) à comprimer,
le module de compresseur (1aa, 1ab, 1ac) étant réalisé sous la forme d'un boîtier intermédiaire de compresseur (1ac) et une structure d'écoulement (22) s'étendant radialement à travers le canal de gaz de compresseur (4) entre une paroi de boîtier intérieure (20) et une paroi de boîtier extérieure (21),
et, dans une surface de paroi de boîtier intérieure (20a), avec laquelle la paroi de boîtier intérieure (20) délimite le canal de gaz de compresseur (4) radialement vers l'intérieur, une ouverture d'évacuation (23) étant disposée pour l'évacuation proportionnelle du gaz de compresseur (3) guidé dans le canal de gaz de compresseur (4),
un canal d'évacuation (25) se raccordant à l'ouverture d'évacuation (23) pour le guidage du gaz d'évacuation (24) évacué par l'ouverture d'évacuation (23),
et le canal d'évacuation (25) s'étendant radialement vers l'extérieur du canal de gaz de compresseur (4) à travers la structure d'écoulement (22),
la surface de paroi de boîtier intérieure (20a) s'étendant axialement avec une courbure et l'ouverture d'évacuation (23) étant disposée dans la courbure et/ou en amont de la courbure, par rapport au gaz de compresseur (3) guidé dans le canal de gaz de compresseur (4), **caractérisé en ce que** l'ouverture d'évacuation (23) s'étend, par rapport au gaz de compresseur (3) guidé dans le canal de gaz de compresseur (4), au moins proportionnellement en amont de la structure d'écoulement (22).

2. Module de compresseur (1ac) selon la revendication 1, dans lequel la surface de paroi de boîtier intérieure (20a) est courbée de manière convexe dans la courbure.

3. Module de compresseur (1ac) selon l'une des revendications précédentes, dans lequel la structure d'écoulement (22) est réalisée sous la forme d'une aube présentant un bord avant (22a) et un bord arrière (22b) par rapport à l'écoulement du gaz de compresseur (3) guidé dans le canal de gaz de compresseur (4), ainsi que deux surfaces latérales (22c,d) s'étendant respectivement entre le bord avant (22a) et le bord arrière (22b).

4. Module de compresseur (1ac) selon la revendication 4, dans lequel l'aube est réalisée de manière à être éventuellement faiblement déviée, à savoir d'au plus 5°.

5. Module de compresseur (1ac) selon l'une des revendications précédentes, dans lequel la structure d'écoulement (22) forme une barre d'appui porteuse ou constitue un revêtement d'une telle barre d'appui.

6. Module de compresseur (1ac) selon l'une des revendications précédentes, dans lequel la structure d'écoulement (22) délimite elle-même en son sein au moins une section du canal d'évacuation (25).

7. Module de compresseur (1ac) selon l'une des revendications précédentes, dans lequel une pluralité de structures d'écoulement (22) sont prévues dans le canal de gaz de compresseur (4) et réparties dans le sens de circulation.

8. Module de compresseur (1ac) selon la revendication 7, dans lequel l'ouverture d'évacuation (23) est disposée, par rapport au sens de circulation, au moins proportionnellement entre deux structures d'écoulement (22) les plus proches l'une de l'autre.

9. Module de compresseur (1ac) selon l'une des revendications précédentes, dans lequel une pluralité d'ouvertures d'évacuation (23) sont prévues dans la surface de paroi de boîtier intérieure (20a), lesquelles sont associées conjointement au canal d'évacuation (25) s'étendant radialement vers l'extérieur à travers la structure d'écoulement (22).

10. Agencement de compresseur (1a) permettant de comprimer du gaz de compresseur (3) pour une turbomachine (1), comportant un module de compresseur réalisé sous la forme d'un boîtier intermédiaire de compresseur (1ac) selon l'une des revendications précédentes et un compresseur (1aa) qui est disposé en amont du boîtier intermédiaire de compresseur (1ac).

11. Agencement de compresseur (1a) selon la revendication 10 comportant un autre compresseur (1ab) qui est disposé en aval du module de compresseur réalisé sous la forme d'un boîtier intermédiaire de compresseur (1ac).

12. Utilisation d'un module de compresseur (1aa, 1ab, 1ac) selon l'une des revendications 1 à 9 ou d'un agencement de compresseur (1a) selon la revendication 10 ou 11 pour une turbomachine (1), en particulier un turboréacteur.
